# EUROPEAN PATENT SPECIFICATION

(11) **EP 2 567 370 B1**
(45) Date of publication and mention of the grant of the patent: **25.02.2015**
(21) Application number: 10776184.3
(22) Date of filing: 10.08.2010
(51) Int. Cl.: G08G 1/123

(54) **MODULAR TERMINAL DEVICE FOR THE SUPPLY OF SERVICES FOR CARS, FLEETS OF CAR AND INDUSTRIAL VEHICLES, ACCORDING TO THEIR USE**
MODULARES ENDGERÄT ZUR BEREITSTELLUNG VON DIENSTEN FÜR AUTOS, FUHRPARKS UND INDUSTRIEFAHRZEUGE JE NACH IHRER VERWENDUNG
DISPOSITIF DE TERMINAL MODULAIRE POUR LA FOURNITURE DE SERVICES DESTINÉS À DES VOITURES, DES FLOTTES DE VOITURES ET DES VÉHICULES INDUSTRIELS, SELON LEUR UTILISATION

(30) Priority: 06.05.2010 IT RM20100078 U
(43) Date of publication of application: 13.03.2013
(73) Proprietor: Viasat SpA, 00156 Roma (IT)
(72) Inventor: PETRONE, Domenico, I-10131 - Torino (IT); STROCCHI, Fabrizio, I-10126 - Torino (IT)
(74) Representative: Fezzardi, Antonio
(86) International application number: PCT/IT2010/000365
(87) International publication number: WO 2011/138808

(56) References cited:
- WO-A1-03/073339

## Description

### Technical sector

The present invention relates to a terminal device for providing services linked to the management, for example, of fleets of vehicles, in the insurance or antitheft sector or in any case in sectors connected to the use of vehicles.

The invention regards in greater detail a device supplied at low voltage (e.g., 8-32 V) to be installed on commercial and industrial vehicles, that is able to connect up to a service centre by exploiting pre-existing communication channels, such as for example, navigators, GSM and GPS modules, cellphones, palmtops, or wide-band Wi-Fi systems.

### State of the art

At the current state of the art known from the patent No. IT1353470, filed in the name of the present applicant, is a terminal device provided with supply of its own, interfaces for connection with communication systems and interfaces for connection with parameters associated to the use of the vehicles.

Document US20080294690 discloses a system and method for automatically registering a vehicle monitoring device.

Document WO03073339 discloses a vehicle monitoring device.

### Purpose of the invention

A first purpose of the present innovation is improvement and integration with the pre-existing systems so that, in use, the user does not have to replace the satellite navigator present in his own vehicle, but merely has to carry out simple upgrade operations.

A second purpose is to be able to provide additional services that may even be altogether separate from the communication system present on board the vehicle.

### Summary of the Invention

The above purposes have been achieved with a terminal device according to at least one of the annexed claims.

A first advantage basically lies in the fact that the device is able to connect up to pre-existing GSM/GPS devices or to integrate them with its own.

Further advantages of the innovation lie in the fact that the user does not necessarily have to replace his own satellite navigator, thus enabling a significant saving in investment costs.

A further advantage consists in the fact that the possible additional services can be upgraded individually and consequently may be acquired individually or in a package by the user.

### List of the drawings

The above and further advantages will be better understood by any person skilled in the branch from the ensuing description and the annexed drawings, which are provided purely by way of non-limiting example and in which:
- Figure 1 shows a first embodiment according to the invention;
- Figure 2 is a schematic illustration of an installation of the device interfaced with devices present on board a vehicle;
- Figure 3 shows a diagram of operation of the on-board device of Figure 2; and
- Figure 4 shows a perspective view of the device assembled and ready for installation on board a vehicle.

### Detailed description of the invention

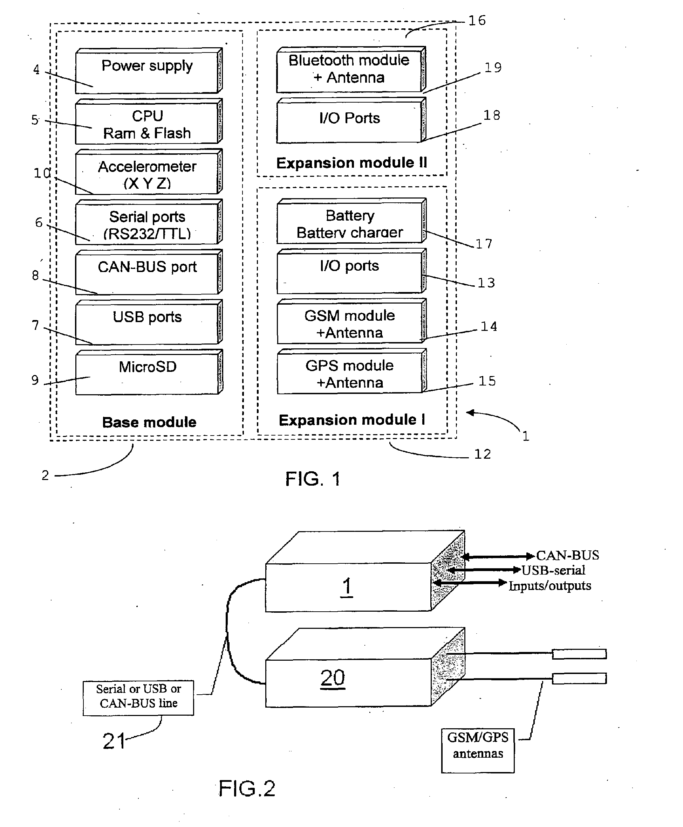

With reference to the attached drawings, and in particular to Figure 1, a device 1 according to the invention comprises a base module 2 that can be contained in a box 3 of limited dimensions, for example 76 mm x 63.5 mm x 35 mm.

The module 2 preferably has the following characteristics:
- supply unit 4 preferably of a standard automotive type (8 V-32 V);
- control unit 5, preferably of the ARM7TDMI CPU type;
- a first data-communication interface 6, for example an RS-232 or TTL serial port;
- a possible second data-communication interface 7, preferably a master USB port and a slave USB port;
- a possible third data-communication interface 8, preferably a high-speed CAN-BUS v. 2.0B port;
- a high-capacity mass memory 9, preferably on a MicroUSD medium;
- a unit 10 that can be associated to the state of the vehicle, for example a three-axes accelerometer.

According to the invention, the base module 2 is in communication with a remote service centre 11 by using external resources, such as for example, GSM/GPRS channels, possibly constituted by devices already existing on the vehicle, to which it will be possible to interface via the serial interface 6 or the USB interface 7, or the CAN-BUS interface 8, or else using a GPS channel, also this possibly already existing on the vehicle.

In this case, the GPS communication and the GSM communication will share the same channel.

In the configuration illustrated, the base module 2 can advantageously be connected to:
- external USB peripherals of various types, such as USB pens, printers, smartcard readers, badge readers, etc.;
- possible master USB devices, such as personal computers or PDAs;
- a CAN-BUS of the vehicle for acquisition of data regarding the latter, or a CAN-BUS of external devices; and
- possible serial devices, for example satellite navigators, for communication between the driver of the vehicle and the centre 11.

In a preferred example of embodiment, the functions provided by the base module 2, in cooperation with the service centre 11, can be:
- recognition of the driver, via USB pen with non-duplicatable encrypted code;
- CAN-BUS interfacing and acquisition of FMS standard data, regarding, for example, fuel consumption, mileometer, fuel-tank level, engine r.p.m., chronotachograph data, etc.;
- satellite-navigator interfacing, for display of new missions or messages from the centre for the driver .and for notification of confirmations by the latter;

- recognition of occurrence of a crash on the basis of the signal measured by the accelerometer;
- reconstruction of the dynamics of the crash for a duration (for example, 1 minute) prior to the crash and for a duration (for example, of 1 minute) subsequent to the crash;
- periodic sending of position to the service centre so that the applications present therein can display the route in real time and provide traffic information, and the manager of the fleet can send missions to the driver.

Once again with reference to Figure 1, there can be added to the box of the device 1 a first expansion module 12, possibly provided with battery charger 17 and having further functions, preferably comprising:
- vehicle active safety, via appropriate sensors that can be connected via I/O ports 13;
- GSM/GPS modules 14/15 for autonomous operation in the absence of GSM/GPS devices already existing on the vehicle.

There can moreover be added to the box of the device 1 a second expansion module 16 with an additional electronic card that can be associated to the base module 1.

In the example illustrated, the additional module 16 adds to the base module the functions of vehicle active safety, via appropriate sensors connected to I/O ports 18, and a wireless interface 19, for example a Bluetooth® device, which is able to connect up to external devices, such as the cellphone of the client, using the latter for connection to the service centre 11.

With reference to Figure 2, illustrated therein is a possible installation of the device 1 in a vehicle provided with a pre-existing GSM/GPS communication device 20 that, via an interface 21, for example a serial or USB port, or a CAN-BUS interface, supplies to the device 1 the function of GSM (SMS and GPRS) communication server and the GPS location frames (NMEA sentence).

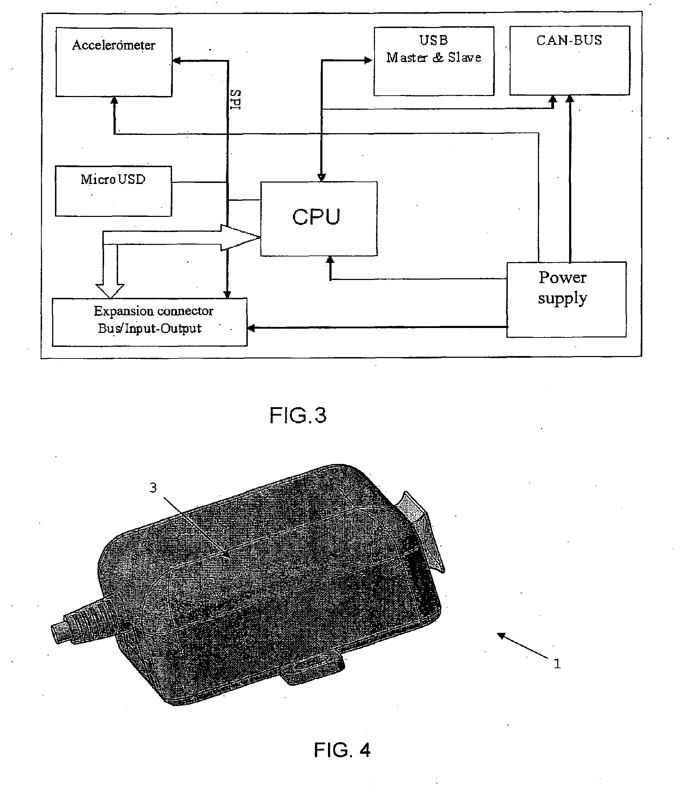

Represented schematically in Figure 3 is operation of the device according to the invention installed on board the vehicle.

In an example of use of the invention, the case of alarm and reconstruction of the crash is described.

The on-board CPU 5 carries out a sampling, via the accelerometer 10, for example at 5 ms, filtering each individual channel so as to eliminate any possible disturbance.

The data accumulated are integrated in time in such a way as to calculate the momentum associated to a crash. The resultant of the momentum detected is compared with three thresholds: minimum threshold, below which the impact is attributed to a pothole or to a hump; average threshold, for which the dynamics of the crash is recorded in the memory of the device 1 and sent to the centre 11, for example in the form of compressed binary files, but no alarm is generated; maximum threshold, above which an alarm is sent to the centre 11 to enable management of a rescue intervention,

Advantageously, the crashes that can be stored on board the device 1 are virtually infinite with respect to the conditions of normal use of a vehicle thanks to the fact that the mass memory can be constituted by a MicroUSD, of a minimum dimension of 2 GB.

Consequently, the device will be able to guarantee the persistence of the data on-board, in a considerable amount, thanks to the MicroUSD memory, even in the event of prolonged periods of absence of communications with the centre 11.

In a second example of use, which regards periodic sending of position, the CPU records the position via the GPS sensor (which is external or is provided in an expansion module). The datum acquired, together with the variation of external quantities detectable by the device 1 (for example, signals of keys, alarm pushbuttons, temperature sensors, door sensors, etc.), is compressed and sent periodically, via encrypted binary protocol, to the service centre 11.

In the centre 11, the positions accumulated are decompressed and used, for example, for the services of:
- off-route alarm;
- alarm regarding delay on arrival schedule;
- calculation of the traffic conditions on the route followed by the vehicle;
- alarm for signalling reaching of non-stop driving time;
- alarm for medical/mechanical emergency; and
- management of accident emergency.

Summed.up in the ensuing table is an example, to be understood in a non-limiting sense, of structural and functional characteristics of a device according to the invention.

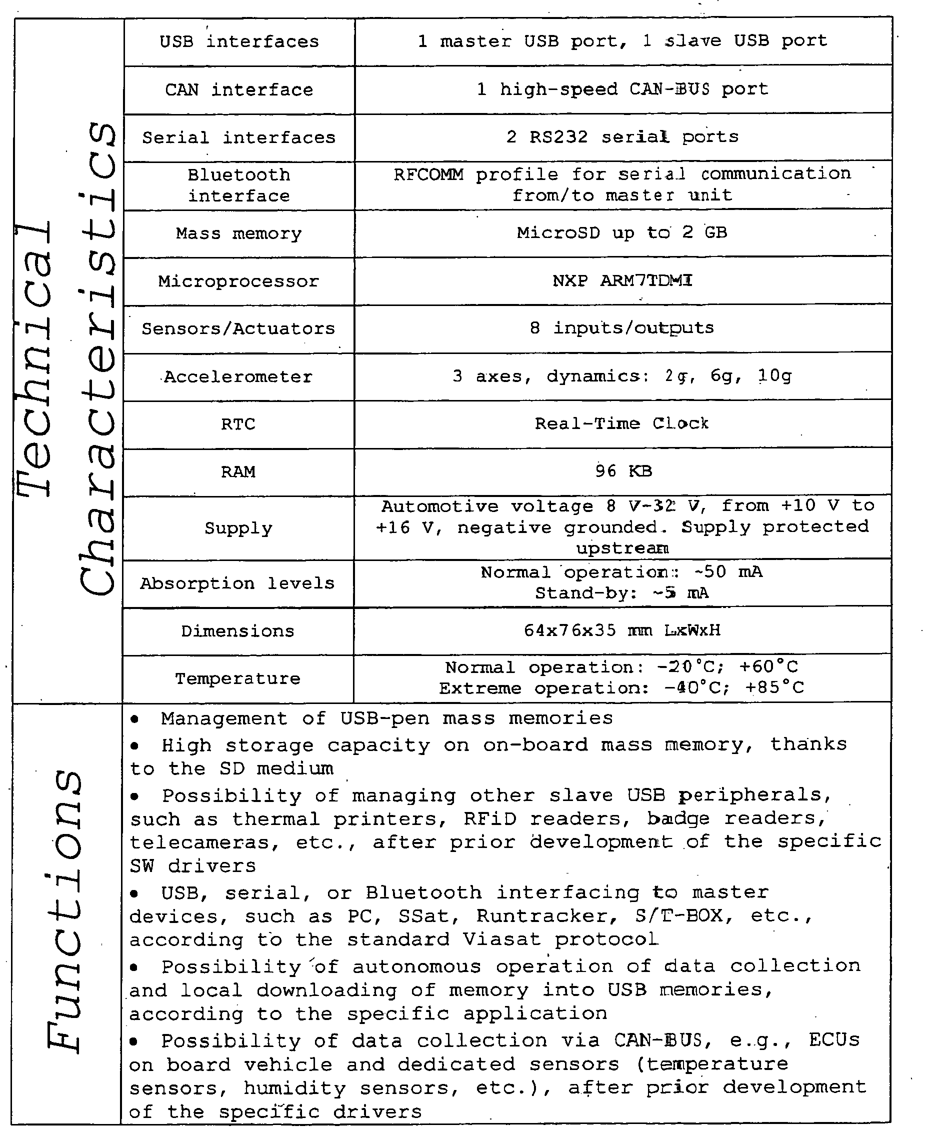

The invention has been described with reference to preferred embodiments, but it is understood that equivalent modifications may be made, without thereby departing from the sphere of protection. In particular, according to the physical embodiment, i.e., to the engineering and industrialization, the invention can cover requirements both for OEM (Original-Equipment Manufacturing) solutions (i.e., first assembly on vehicles) and for after-market solutions.

## Claims

1. A modular terminal device for providing services for motor vehicles and fleets of cars and industrial vehicles, according to their use, **characterized, in that** it comprises:
- a base module (2) provided with a supply unit (4);
- an electronic unit (5);
- at least one data-communication interface (6, 7, 8) associated to the use of the vehicle;
- a mass memory (9) for storage in time of data regarding the effective use of the vehicle;
- a data-detection unit (10) that can be associated to the state of the vehicle; and
- means for intercommunication with a remote service centre (11) for exchange of data regarding the use of the vehicle;
wherein said data-detection unit (10) that can be associated to the state of the vehicle comprises an accelerometer with two, three or more axes, and wherein the data accumulated are integrated in time in such a. way as to calculate the momentum associated to a crash; the resultant of the momentum detected being compared with three thresholds: minimum threshold, below which the impact is attributed to a pothole or to a hump; average threshold, for which the dynamics of the crash is recorded in the memory of the device and sent to the centre (11), for example in the form of compressed binary files, but no alarm is generated; maximum threshold, above which an alarm is sent to the centre (11) to enable management of a rescue intervention.

2. The device according to Claim 1, wherein said intercommunication means comprise an interface (21) with a remote-intercommunication device (20) that can be connected to said centre (11).

3. The device according to Claim 2, wherein said interface is a serial or USB port or a USB interface or a Bluetooth interface.

4. The device according to Claim 1, comprising at least one expansion module (12) provided with autonomous modules (14/15) for intercommunication with said centre (11).

5. The device according to Claim 1, comprising at least one expansion module (16) provided with a wireless interface (19), which is able to connect up to external devices for connection to the service centre (11).

6. The device according to either Claim 4 or Claim 5, wherein at least one expansion module (12, 16) comprises I/O ports (13, 18) or a Bluetooth interface (19), for connection to sensors for active safety of the vehicle.

7. The device according to any one of the preceding claims, wherein said at least one data-communication interface (6, 7, 8) associated to the use of the vehicle comprises a serial port (6) for connection with serial devices, for example satellite navigators, for communication with the centre (11) of data regarding the position of the vehicle.

8. The device according to any one of the preceding claims, wherein said at least one data-communication interface (6, 7, 8) associated to the use of the vehicle, comprises a master USB port and a slave USB port (7) for connection to external USB peripherals such as USB pens, printers, smartcard readers, badge readers, or to master USB devices, such as personal computers or PDAs.

9. The device according to any one of the preceding claims, wherein said at least one data-communication interface (6, 7, 8) associated to the use of the vehicle, comprises a CAN-BUS port (8) for connection to a channel of a CAN-BUS type of the vehicle for acquisition of data regarding the latter, or to CAN-BUSes of external devices.

10. The device according to any one of the preceding claims, wherein said high-capacity mass memory (9) is on a MicroUSD medium.

11. The device according to any one of the preceding claims, wherein at least one expansion module (12, 16) is provided with a battery and electronic circuit for managing battery charging (17).

12. The device according to any one of the preceding claims, wherein said data regarding the use of the vehicle are data regarding alarm events and reconstruction of a crash of the vehicle.

13. The device according to any one of the preceding claims, wherein said data regarding the use of the vehicle are data regarding the position of the vehicle.

## Patentansprüche

1. Modulares Endgerät zur Bereitstellung von Diensten für Kraftfahrzeuge, Fuhrparks und Industriefahrzeuge je nach ihrer Verwendung, **dadurch gekennzeichnet, dass** dieses aufweist:
- ein Basismodul (2) mit einer Versorgungseinheit (4);
- eine elektronische Einheit (5);
- mindestens eine Datenkommunikationsschnittstelle (6, 7, 8), welche der Verwendung des Fahrzeugs zugeordnet ist;
- ein Massenspeicher (9) zum Speichern der Daten in Echtzeit, welche die tatsächliche Verwendung des Fahrzeugs betreffen;
- eine Datenerfassungseinheit (10), die dem Zustand des Fahrzeugs zugeordnet werden kann; und
- Mittel zur Kommunikation mit einem entfernten Servicezentrum (11) zum Austausch von Daten bezüglich der Nutzung des Fahrzeugs;
wobei die Datenerfassungseinheit (10), die dem Zustand des Fahrzeugs zugeordnet werden kann, einen Beschleunigungsmesser mit zwei, drei oder mehr Achsen aufweist und wobei die gesammelten Daten rechtzeitig derart integriert werden, um den zugehörigen Impuls eines Zusammenstoßes zu berechnen; wobei das Ergebnis der erfassten Impulse mit drei Schwellwerten verglichen wird: minimaler Schwellwert, unterhalb dessen die Auswirkungen einem Schlagloch oder einem Buckel zugeschrieben werden; durchschnittlicher Schwellwert, für den die Dynamik eines Zusammenstoßes in dem Speicher der Vorrichtung gespeichert wird und an das Zentrum (11), beispielsweise in Form von komprimierten Binärdateien, gesendet wird, jedoch kein Alarm erzeugt wird; maximaler Schwellwert, oberhalb dessen ein Alarm an das Zentrum (11) gesendet wird, um die Durchführung einer Rettungsaktion zu ermöglichen.

2. Vorrichtung nach Anspruch 1, wobei die Kommunikationsmittel eine Schnittstelle (21) mit einer Fernsprecheinrichtung (20), die mit dem Zentrum (11) verbunden werden kann, aufweist.

3. Vorrichtung nach Anspruch 2, wobei die Schnittstelle als serieller USB-Anschluss oder USB-Schnittstelle oder Bluetooth-Schnittstelle ausgebildet ist.

4. Vorrichtung nach Anspruch 1 aufweisend zumindest ein Erweiterungsmodul (12) mit autonomen Modulen (14/15) zur Kommunikation mit dem Zentrum (11).

5. Vorrichtung nach Anspruch 1 aufweisend zumindest ein Erweiterungsmodul (16) mit einer Drahtlosschnittstelle (19), welche geeignet ist, sich mit externen Geräten zu verbinden, um eine Verbindung zu dem Servicezentrum (11) zu gewährleisten.

6. Vorrichtung nach Anspruch 4 oder 5, wobei zumindest ein Erweiterungsmodul (12, 16) I/O-Anschlüsse (13, 18) oder eine Bluetooth-Schnittstelle (19) aufweist zur Verbindung mit Sensoren für die aktive Sicherheit des Fahrzeugs.

7. Vorrichtung nach einem der vorhergehenden Ansprüche, wobei die zumindest eine Datenkommunikationsschnittstelle (6, 7, 8), welche der Verwendung des Fahrzeugs zugeordnet ist, einen seriellen Anschluss (6) zur Verbindung mit Seriengeräten, beispielsweise Satellitennavigationsgeräten, aufweist, zur Kommunikation von Daten betreffend die Position des Fahrzeugs mit dem Zentrum (11).

8. Vorrichtung nach einem der vorgehenden Ansprüche, wobei die zumindest eine Datenkommunikationsschnittstelle (6, 7, 8), welche der Verwendung des Fahrzeugs zugeordnet ist, einen USB-Masteranschluss und einen Slave-USB-Anschluss (7) zur Kommunikation mit externen USB-Peripheriegeräten, etwa USB-Stiften, Drucker, Smartcard-Lesegeräten, Plakettenlesegeräten oder mit Master-USB-Geräten, etwa PCs oder PDAs.

9. Vorrichtung nach einem der vorhergehenden Ansprüche, wobei die zumindest eine Datenkommunikationsschnittstelle (6, 7, 8), welche der Verwendung des Fahrzeugs zugeordnet ist, einen CAN-BUS-Anschluss (8) zur Verbindung mit einem Kanal eines CAN-BUS-Typs des Fahrzeugs zum Erhalten von Daten betreffend die letztere aufweist oder zu CAN-BUSsen von externen Geräten.

10. Vorrichtung nach einem der vorhergehenden Ansprüche, wobei der hochkapazitive Massenspeicher (9) ein MicroUSD-Medium ist.

11. Vorrichtung nach einem der vorhergehenden Ansprüche, wobei das zumindest eine Erweiterungsmodul (12, 16) mit einer Batterie und einer elektrischen Schaltung zur Steuerung der Batterieladung (17) vorgesehen ist.

12. Vorrichtung nach einem der vorhergehenden Ansprüche, wobei die die Verwendung des Fahrzeugs betreffenden Daten Daten sind, welche Alarmereignisse und die Rekonstruktion eines Zusammenstoßes des Fahrzeugs betreffen.

13. Vorrichtung nach einem der vorhergehenden Ansprüche, wobei die die Verwendung des Fahrzeugs betreffenden Daten Daten sind, welche die Position des Fahrzeugs betreffen.

## Revendications

1. Dispositif de terminal modulaire pour fournir des services pour des véhicules à moteur et des flottes de voitures et des véhicules industriels, selon leur utilisation, **caractérisé en ce qu'**il comprend :
- un module de base (2) muni d'une unité d'alimentation (4) ;
- une unité électronique (5) ;
- au moins une interface de communication de données (6, 7, 8) associée à l'utilisation du véhicule ;
- une mémoire de masse (9) pour le stockage dans le temps de données concernant l'utilisation effective du véhicule ;
- une unité de détection de données (10) qui peut être associée à l'état du véhicule ; et
- des moyens d'intercommunication avec un centre de services à distance (11) pour un échange de données concernant l'utilisation du véhicule ;
dans lequel ladite unité de détection de données (10) qui peut être associée à l'état du véhicule comprend un accéléromètre avec deux, trois axes ou plus, et dans lequel les données accumulées sont intégrées dans le temps de manière à calculer le moment associé à un accident ; le résultat du moment détecté étant comparé à trois seuils : seuil minimum, au-dessous duquel l'impact est attribué à un nid-de-poule ou une bosse ; un seuil moyen, pour lequel la dynamique de l'accident est enregistré dans la mémoire du dispositif et transmise au centre (11), par exemple sous la forme de fichiers binaires compressés, mais aucune alarme n'est générée ; seuil maximum, au-dessus duquel une alarme est transmise au centre (11) pour permettre la gestion d'une intervention de secours.

2. Dispositif selon la revendication 1, dans lequel lesdits moyens d'intercommunication comprennent une interface (21) avec un dispositif d'intercommunication à distance (20) qui peut être connecté audit centre (11).

3. Dispositif selon la revendication 2, dans lequel ladite interface est un port série ou USB ou une interface USB ou une interface Bluetooth.

4. Dispositif selon la revendication 1, comprenant au moins un module d'extension (12) muni de modules autonomes (14/15) pour l'intercommunication avec ledit centre (11).

5. Dispositif selon la revendication 1, comprenant au moins un module d'extension (16) muni d'une interface sans fil (19), qui est en mesure de connecter des dispositifs externes pour la connexion au centre de services (11).

6. Dispositif selon la revendication 4 ou la revendication 5, dans lequel au moins un module d'extension (12, 16) comprend des ports I/O (13, 18) ou une interface Bluetooth (19), pour la connexion de capteurs pour la sécurité active du véhicule.

7. Dispositif selon l'une quelconque des revendications précédentes, dans lequel ladite au moins une interface de communication de données (6, 7, 8) associée à l'utilisation du véhicule comprend un port série (6) pour la connexion avec des dispositifs série, par exemple des systèmes de navigation par satellite, pour la communication avec le centre (11) de données concernant la position du véhicule.

8. Dispositif selon l'une quelconque des revendications précédentes, dans lequel ladite au moins une interface de communication de données (6, 7, 8) associée à l'utilisation du véhicule comprend un port USB maître et un port USB esclave (7) pour la connexion à des périphériques USB externes tels que des clés USB, imprimantes, lecteurs de carte intelligente, lecteurs de badges, ou à des dispositifs USB maîtres, tels que des ordinateurs personnels ou des PDA.

9. Dispositif selon l'une quelconque des revendications précédentes, dans lequel ladite au moins une interface de communication de données (6, 7, 8) associée à l'utilisation du véhicule comprend un port CAN-BUS (8) pour la connexion à un canal d'un type CAN-BUS du véhicule pour l'acquisition de données concernant celui-ci, ou à des CAN-BUS de dispositifs externes.

10. Dispositif selon l'une quelconque des revendications précédentes, dans lequel ladite mémoire de masse de grande capacité (9) est sur un support MicroUSD.

11. Dispositif selon l'une quelconque des revendications précédentes, dans lequel au moins un module d'extension (12, 16) est muni d'une batterie et d'un circuit électronique pour la gestion de la charge de la batterie (17).

12. Dispositif selon l'une quelconque des revendications précédentes, dans lequel lesdites données concernant l'utilisation du véhicule sont des données concernant des événements d'alarme et la reconstruction d'un accident du véhicule.

13. Dispositif selon l'une quelconque des revendications précédentes, dans lequel lesdites données concernant l'utilisation du véhicule sont des données concernant la position du véhicule.
